# EUROPÄISCHE PATENTSCHRIFT

(11) **EP 0 673 162 B1**
(45) Veröffentlichungstag und Bekanntmachung des Hinweises auf die Patenterteilung: **26.07.2000**
(21) Anmeldenummer: 95103013.9
(22) Anmeldetag: 03.03.1995
(51) Int. Cl.: H04N 7/15

(54) **Kommunikationssystem**
Communication system
Système de communication

(30) Priorität: 15.03.1994 DE 4408738
(43) Veröffentlichungstag der Anmeldung: 20.09.1995
(73) Patentinhaber: ALCATEL, 75008 Paris (FR)
(72) Erfinder: Bertsch, Günter, D-73207 Plochingen (DE); Lemke, Andreas, Dr., D-70195 Stuttgart (DE); Perschmann, Ulrich, D-70376 Stuttgart (DE); Wagener, Andreas, D-71229 Leonberg-Höfingen (DE)
(74) Vertreter: Knecht, Ulrich Karl, Dipl.-Ing.

(56) Entgegenhaltungen:
- EP-A- 0 574 138
- WO-A-92/21211
- US-A- 4 821 029
- US-A- 4 965 819
- US-A- 5 025 314
- US-A- 5 239 373
- IEEE COMMUNICATIONS MAGAZINE, Bd. 30, Nr. 5, 1.Mai 1992 Seiten 38-43, XP 000321469 AHUJA S R ET AL 'COORDINATION AND CONTROL OF MULTIMEDIA CONFERENCING'
- PATENT ABSTRACTS OF JAPAN vol. 010 no. 064 (P-436) ,14.März 1986 & JP-A-60 205686 (HITACHI SEISAKUSHO KK) 17.Oktober 1985,

## Beschreibung

Die Erfindung betrifft ein Kommunikationssystem zur gemeinschaftlichen Kommunikation und Zusammenarbeit zwischen Arbeitsplätzen.

Aus der Stand der Technik sind Video-Konferenzsysteme bekannt. Um bei Besprechungen über den Sprachkontakt hinaus einen direkten Blickkontakt zu dem Gesprächspartner zu haben, werden diese Videokonferenzsysteme verwendet. Zusätzlich erfolgt eine Visualisierung technischer Sachverhalte auf beiden (oder mehreren) Seiten gleichzeitig. Zusätzlich dazu ist es häufig wichtig, eine Einspielung und Übertragung eines Videofilmes vorzunehmen. Als Grundausstattung besitzt dabei der Arbeitsplatz einen Monitor mit integrierter Personenkamera, einem Video-Multplexer zur Auswahl der Bildsignalquellen sowie einem Videotelefoncontroller zur Steuerung, zum Verbindungsaufbau und zur Signalisierung. Der Arbeitsplatz kann zusätzlich an das Telefonnetz angeschlossen werden. Eine Dokumentenkamera kann jederzeit hinzugefügt werden ("Video- und Datenkommunikation in VBN", Pernsteiner P., Brendel F., ntz; Bd. 42 (1989) Heft 8; Seiten 486 - 493).

Des weiteren sind aus dem Stand der Technik Kommunikationsarbeitsplätze bekannt, bei denen über ein Breitbandnetz bewegtes Video, Sprache und Daten gleichzeitig übertragen wird. Ein Arbeitsplatz besteht dabei aus einer Videokamera, Mikrofon, Breitbandtelefon und einer Steuereinheit.

Als sogenannte "virtuelle Arbeitsplätze" soll ein Desktop-Video-Konferenzsystem entwickelt werden, mit denen z.B. Politiker über ein FDDI-Breitbandnetz konferieren und dazu Grafiken, Dokumente und Videos austauschen können (Multimedia, Das Handbuch für interaktive Medien; Graf J., Treplin D., Neue Mediengesellschaft Ulm mbH; Kapitel 6.5 Kommunikation; Kapitel 6.5.1 und 6.5.3; 12/93).

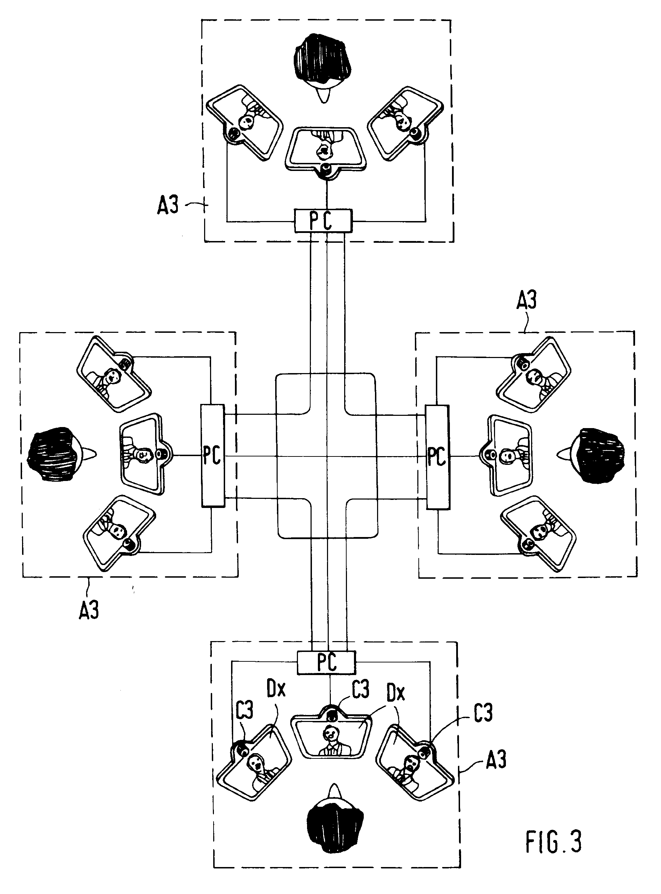

Aus IEEE Communications Magazine, Bd 30, Nr. 5, 1. Mai 1992, Seiten 38-43 ist ein Videokonferenzsystem bekannt, bei dem von einer gemeinsamen, gleichartigen Konferenzoberfläche aus ( 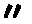 virtual meeting room") Daten in Applikationsprogramme eingegeben oder deren Ausgabedaten angesehen werden können (siehe Figur 3, 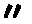 Program A, B, C"). Zwar können mit einem solchen System Daten oder auch Dokumente von verschiedenen Rechnerarbeitsplätzen aus bearbeitet werden, die Rechnerarbeitsplätze sind jedoch nicht auf die spezifischen Bedürfnisse von deren Nutzern oder von Nutzergruppen ausgerichtet. Es muß also an jeden Nutzer eines jeden solchen Rechnerabeitsplatzes ein- und dieselbe technische Mindestkenntnis gestellt werden.

Es ist Aufgabe der Erfindung ein Kommunikationssystem vorzusehen, mit welchem von mehreren, jeweils an die Erfordernisse unterschiedlicher Bearbeitungsschritte angepaßter Arbeitsplätzen aus gemeinschaftlich an einem Dokument gearbeitet werden kann und bei dem Sprach- und Bilddaten übertragen werden können.

Die Aufgabe wird erfindungsgemäß gelöst durch die Lehre des ersten, vierten und fünften Patentanspruchs.

Ein Vorteil der Erfindung ist, daß gleichzeitig an verschiedenen Orten ein Dokument gemeinsam von mehreren Kommunikationsarbeitsplätzen aus bearbeitet werden kann. Ein Kommunikationsarbeitsplatz kann hierfür aus einem funktionell voll ausgerüsteten Kommunikationsarbeitsplatz bestehen, wohingegen ein weiterer Kommunikationsarbeitsplatz so gestaltet ist, daß er mit einfachen Mitteln, beispielsweise dem Finger, bedient werden kann. Dies ermöglicht es auch in vorteilhafter Weise einer Person, die ungeübt im Umgang mit Datenverarbeitungsendgeräten ist, diese zu benutzen, ohne dabei spezielle Kenntnisse miteinbringen zu müssen.

Ein weiterer Vorteil ist die multimediale Anwendung für gleichzeitige Videoübertragung plus Videotelefone und/oder Textdokumentenbearbeitung.

Weitere vorteilhafte Ausgestaltungen sind in den Unteransprüchen 2, 3 und 6 beschrieben.

Die Unteransprüche 2 und 3 zeigen weitere mögliche Kommunikationsarbeitsplätze auf, von denen aus in einer Gruppe gearbeitet werden kann. Eine Gruppe von Personen kann gemeinschaftlich Dokumente erstellen und diese gleichzeitig mit einer weiteren, entfernten Person besprechen.

Im folgenden wird die Erfindung anhand der Figuren näher erläutert. Folgende Figuren zeigen:
- Fig. 1:: Darstellung eines erfindungsgemäßen Kommunikationssystems,
- Fig. 2:: Darstellung eines Gruppenarbeitsplatzes,
- Fig. 3:: Konferenzschaltung von Gruppenarbeitsplätzen,
- Fig. 4:: Benutzeroberfläche eines Kommunikationsarbeitsplatzes.

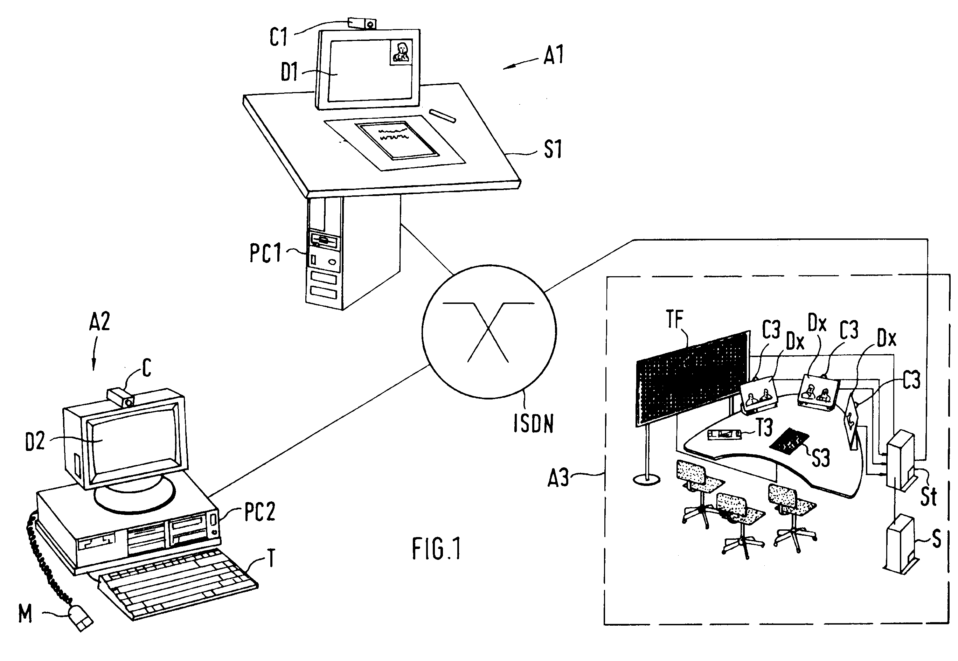

Im folgenden wird die Erfindung anhand von Figur 1 und anhand eines möglichen Ausführungsbeispiels des Kommunikationssystems näher erläutert.

Ein Kommunikationssystem benutzt zur Verbindung von Kommunikationsarbeitsplätzen ein Telekommunikationsnetz ISDN, welches der Übertragung von Sprach- und Bilddaten und/oder Dokumentdaten dient.

Mit dem Telekommunikationsnetz ist mindestens ein erster Kommunikationsarbeitsplatz A1 verbunden. Der erste Kommunikationsarbeitsplatz A1 besteht aus einer Anzeigevorrichtung D1 mit einer berührungsempfindlichen Oberfläche, z.B. einem sogenannten Touchscreen. Des weiteren besteht der Kommunikationsarbeitsplatz A1 aus einem Datenverarbeitungsendgerät PC1 mit einer Software für eine Benutzeroberfläche, aus einer Kamera C1 und einer Schnittstelle zur Verbindung mit dem Telekommunikationsnetz. Zusätzlich kann der erste Kommunikationsarbeitsplatz noch eine berührungsempfindliche Schreiboberfläche S1 mit Handschrifterkennung beinhalten. Auf dieser Schreiboberfläche S1 kann mittels eines Stifts handschriftlich eine Einfügung oder Anmerkung vorgenommen werden.

Das Kommunikationssystem besteht des weiteren aus mindestens einem zweiten Kommunikationsarbeitsplatz A2. Dieser setzt sich aus einer Anzeigevorrichtung D2, wie einem Display, aus einem Datenverarbeitungsendgerät PC2 mit einer Tastatur T, aus einer Kamera C2 und einer Schnittstelle zur Verbindung mit dem Telekommunikationsnetz ISDN zusammen.

Als Telekommunikationsnetz ISDN kann ein digitales ISDN-Netz oder ein Breitband-ISDN (B-ISDN) oder aber ein Vorläufer-Breitband-Netz (VBN) oder aber ein ähnliches digitales Netz verwendet werden.

Eine gemeinschaftliche Zusammenarbeit und Kommunikation zwischen den Kommunikationsarbeitsplätzen A1, A2 erfolgt über das Telekommunikationsnetz ISDN und läuft folgendermaßen ab:

Nach Herstellung einer Verbindung zwischen den Kommunikationsarbeitsplätzen wird ein Benutzer des ersten Kommunikationsarbeitsplatzes A1 von der Kamera C1 aufgenommen und die Bilddaten werden zu dem zweiten Kommunikationsarbeitsplatz A2 übertragen und dort einem weiten Benutzer auf der Anzeigevorrichtung D2, im folgenden Display genannt, angezeigt. Dieser Benutzer wird ebenfalls von der dort befindlichen Kamera C2 aufgenommen, deren Bilddaten zu dem ersten Kommunikationsarbeitsplatz übertragen werden.

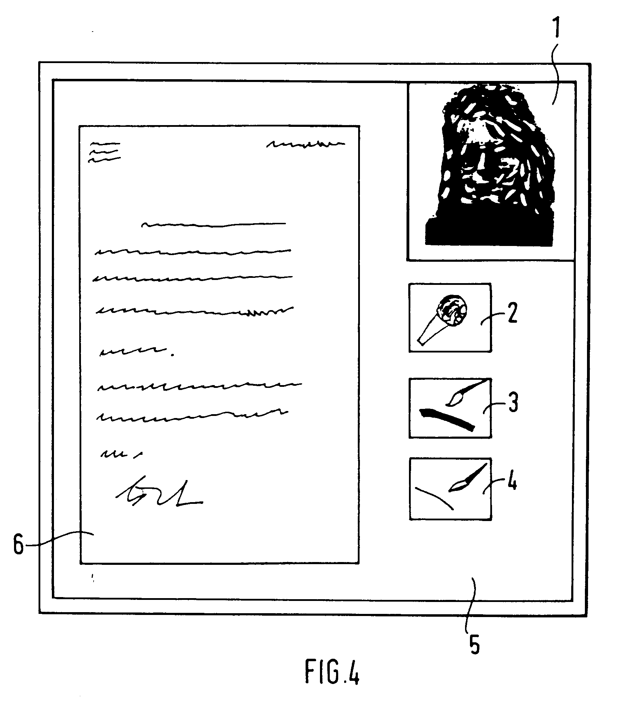

An jedem der Kommunikationsarbeitsplätze befindet sich ein Datenverarbeitungsendgerät PC1 und PC2 mit einer Standardsoftware für Textverarbeitung, Grafikerstellung usw. An dem zweiten Kommunikationsarbeitsplatz wird ein Textdokument, beispielsweise von einem Sachbearbeiter, mittels Eingaben über die Tastatur T oder Maus M erstellt oder aber eine Programmierung wird vorgenommen. Danach wird beispielsweise dem Vorgesetzten, der dieses Textdokument genehmigen muß und der sich am ersten Kommunikationsarbeitsplatz A1 befindet, das Textdokument auf seinem Display D1 angezeigt. Zur Korrektur oder um Anmerkungen in den bestehenden Text einzufügen oder aber um Dienste aufzurufen, steht an dem ersten Kommunikationsarbeitsplatz A1 eine spezielle Software für eine Benutzeroberfläche zur Verfügung, die, wie später anhand von Figur 4 noch näher erläutert wird, es ermöglicht, Korrekturen und Anmerkungen unter Zuhilfenahme einfachster Mittel einzugeben und Dienste aufzurufen. Dazu wird über das berührungsempfindliche Display D1 oder über die berührungsempfindliche Oberfläche S1 mit Handschrifterkennung eine Eingabe durch Verwendung des Fingers oder eines speziellen Stiftes gemacht. Ebenso kann über Aufruf einer Funktion ein mündlicher Kommentar an den Sachbearbeiter gerichtet werden, der dann die Aufgabe hat, den Kommentar zu verwenden.

Des weiteren kann wahlweise oder auch zusätzlich eine Videosequenz über die Displays D1 und D2 gezeigt werden. Möglich ist ebenso eine Unterlegung des ganzen durch Musik, als mittels Übertragung von Ton.

Ein über die berührungsempfindliche Oberfläche des Displays D1 eingegebene Anmerkung oder Kennzeichnung eines Textes wird gleichzeitig auch an dem Display D2 des zweiten Kommunikationsarbeitsplatzes A2 angezeigt.

Das Kommunikationssystem ist so erweiterbar, daß noch mehr Kommunikationsarbeitsplätze A1 und A2 hinzugefügt werden können. Eine Abschaltung eines jeden Kommunikationsarbeitsplatzes ist von jedem anderen Kommunikationsarbeitsplatz aus möglich. Es ist auch jederzeit möglich, nur eine Übertragung der aktuell über die Kameras aufgezeichneten Bilder vorzunehmen, also eine Bildtelefonfunktion mit gleichzeitigem Ton. Und ebenso ist es möglich, gleichzeitig eine Videosequenz zu übertragen, die dann mündlich besprochen werden kann.

Die möglichen Funktionen, die von den Kommmunikationsarbeitsplätzen aus, bei einer Textdokumentarbeit erfolgen können sind, ohne den Anspruch auf Vollständigkeit zu erheben:

### Telekommunikationsarbeitsplatz A1:

- markieren (Textmarker)
- unterstreichen
- einfügen (sowohl Text als auch Sprache)
- Korrekturzeichen setzen
- löschen
- kopieren
- Trennzeichen eingeben.

### Telekommunikationsarbeitsplatz A2:

- programmieren
- Textdokument erstellen
- Textformat festlegen
- Grafiken, Bilder einfügen
- kopieren
- Schriftart ändern
- Textdokument ablegen und versenden
- korrigieren

Von dem ersten Kommunikationsarbeitspltz A1 aus, können ebenfalls verschiedene Dienste aufgerufen werden. Als Dienste sind hier möglich:
- Kommunikation mit den Funktionen für Telefon, Bildtelefon, Mail und Telefonfax
- Sprache mit den Funktionen für Ruf, Diktieren, Musik, Sprachnotizen
- Dokumente mit den Funktionen für Brief, Ordner (Ablage), Presse (von außen eingeblendet) und Privatpost
- Medien mit den Funktionen für TV, Video, TV-News und Dokumentenkamera.

Alle diese Dienste und Funktionen sind durch Berührung der berührungsempfindlichen Oberfläche aufrufbar.

Ein Kommunikationssystem kann ebenso einen Gruppenarbeitsplatz A3 beinhalten, welcher in der Figur 1 in gebrochenen Linien dargestellt ist. Der Gruppenarbeitsplatz A3 ist über eine Steuereinheit St mit dem Telekommunikationsnetz ISDN verbunden. An die Steuereinheit St ist ein Server S angeschlossen.

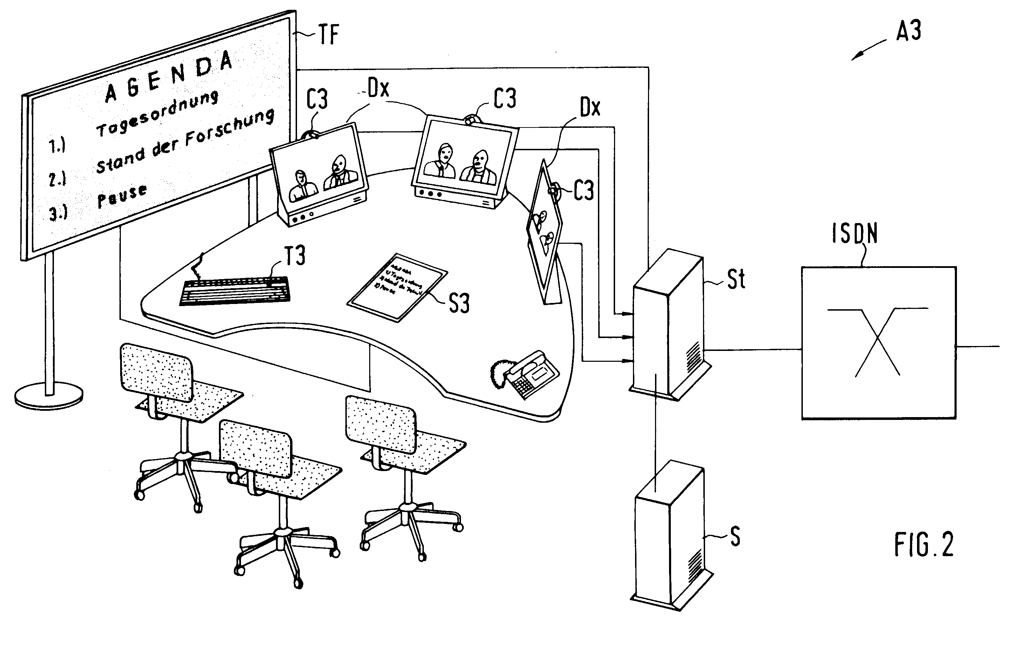

In der Figur 2 ist der Gruppenarbeitsplatz vollständig dargestellt und wird deshalb anhand der Figur näher erläutert.

Der Gruppenarbeitsplatz besteht aus einer Vielzahl von Anzeigevorrichtungen Dx. Besonders geeignet scheinen hierbei 2 bis 4 Anzeigevorrichtungen Dx zu sein, für eine gemeinschaftliche Gruppe von 1 bis 4 Personen. Entsprechend der Anzahl von Anzeigevorrichtungen besitzt der Gruppenarbeitsplatz A3 eine Anzahl von Kameras C3. Der Gruppenarbeitsplatz A3 besitzt eine berührungsempfindliche Schreiboberfläche mit Handschrifterkennung S3 und/oder eine Tastatur zur handschriftlichen bzw. eingeschriebenen Eingabe eines Textdokumentes oder einer Grafik.

Wahlweise kann ein solcher Gruppenarbeitsplatz A3 noch eine Großbildprojektionsanordnung beinhalten auf der, für die Gruppe gut sichtbar, eine Großabbildung dessen, was sich auf der berührungsempfindlichen Oberfläche befindet, dargestellt wird.

Die Vielzahl von Anzeigevorrichtungen und Kameras dient dazu, daß jeder Benutzer aus einer Gruppe von Benutzern einen scheinbar direkten Blickkontakt zu seinem virtuellen "Gegenüber" hat. Dies ist unerläßlich für eine Gruppenarbeit. Der Gruppenarbeitsplatz kann, entsprechend den Anforderungen, auch wahlweise über tragbare Datenverarbeitungsendgeräte (Laptop) eine Datenkommunikation mit einem weiteren Benutzer vornehmen (ohne Abbildung). Dazu müßte der Server S so umfunktioniert werden, daß er über eine Funkschnittstelle und eine Funkverbindung mit den oder dem Laptop verbunden wird.

Bei den beiden vorgenannten Figuren sind die bezeichneten Kameras Videokameras oder kombinierte Video-Objektkameras. Möglich ist natürlich auch, eine weitere zusätzliche Kamera als Objekt-Kamera auszubilden.

Eine weitere besondere Ausgestaltung wird anhand von Figur 3 erläutert.

Um ein Videokonferenzsystem aufbauen zu können, werden 4 Gruppenarbeitsplätze A3 zusammengeschaltet und jeder der 4 Gruppenarbeitsplätze wird mit den 3 jeweils anderen Gruppenarbeitsplätzen verbunden. Dadurch, daß an jedem Gruppenarbeitsplatz jeweils 3 Anzeigevorrichtungen Dx vorhanden sind und auch 3 Kameras C3, hat jeder mit jedem einen virtuellen Blickkontakt, was, wie bereits vorher erläutert, unerläßlich ist.

Im folgenden wird anhand von Figur 4 eine Benutzeroberfläche eines Kommunikationsarbeitsplatzes A1 erläuert.

Die Benutzeroberfläche besteht beispielsweise aus einem ersten Feld 1, welches die von einer Kamera C3 eines anderen Kommunikationsarbeitsplatzes A2 aufgenommenen Bilddaten wiedergibt.

Ein zweites 2, drittes 3 und viertes 4 Feld ist durch Berührung für eine Funktion oder Dienst aufrufbar. Die Anzahl dieser Felder ist nicht beschränkt, sollte aber der Übersichtlichkeit halber in einem überschaubaren Rahmen bleiben.

Das erste 1 Feld kann hierbei beispielsweise für den Aufruf einer Funktion stehen, die es erlaubt, per Sprache Kommentare einzugeben. Das zweite 2 Feld kann hierbei für eine Markierfunktion stehen.

Das dritte 3 Feld kann hierbei für eine Funktion zum Unterstreichen stehen. Ein weiteres sechstes Feld 6 zeigt ein Textdokument an, welches gleichzeitig an mehreren Kommunikationsarbeitsplätzen angezeigt wird.

Das fünfte Feld 5, das Hintergrundfeld, ist mittels Berührung dazu zu verwenden, in einem Textdokument zu blättern.

Die Anordnung und Zuordnung der Felder ist frei wählbar, sollte aber so gewählt sein, daß ein mit Datenverarbeitungsgeräten ungeübter Benutzer diese problemlos und einfach bedienen kann.

Es ist ebenfalls möglich, die einzelnen Felder so zuzuordnen, daß durch Berührung verschiedene Dienste und deren Funktionen (Unterprogramme) aufgerufen werden, wie dies bereits vorher beschrieben wurde.

## Patentansprüche

1. Kommunikationssystem
- mit mindestens einem ersten Kommunikationsarbeitsplatz (A1), der sich aus einer Anzeigevorrichtung (D1) mit einer berührungsempfindlichen Oberfläche, aus einem Datenverarbeitungsendgerät (PC1) mit einer Software für eine Benutzeroberfläche, aus einer Kamera (C1), aus einer berührungsempfindlichen Schreiboberfläche (S1) mit Handschrifterkennung, auf der ein handschriftlicher Kommentar erstellt werden kann, sowie aus einer Schnittstelle zur Verbindung mit einem Telekommunikationsnetz (ISDN) zur Übertragung von Sprach- und/oder Bilddaten und/oder Dokumentdaten zusammensetzt, und bei dem an dem ersten Kommunikationsarbeitsplatz (A1) Dokumente mittels Eingabe über die berührungsempfindliche Oberfläche der Anzeigevorrichtung (D1) markiert, Anmerkungen eingefügt, Folgefunktionen ausgelöst und Dienste aufgerufen werden können,
- mit mindestens einem zweiten Kommunikationsarbeitsplatz (A2), der sich aus einer Anzeigevorrichtung (D2), aus einem Datenverarbeitungsendgerät (PC2) mit einer Tastatur (T), aus einer Kamera (C2) und einer Schnittstelle zur Verbindung mit dem Telekommunikationsnetz (ISDN) zusammensetzt und bei dem an dem zweiten Kommuniktionsarbeitsplatz (A2) mittels der Tastatur (T) und dem Datenverarbeitungsendgerät (PC2) Dokumente erstellt und bearbeitet werden und Folgefunktionen ausgelöst werden,
- bei dem der mindestens eine erste Kommunikationsarbeitsplatz (A1) mit dem mindestens einen zweiten Kommunikationsarbeitsplatz über das Telekommunikationsnetz (ISDN) verbunden ist
- und bei dem an dem mindestens einen ersten Kommunikationsarbeitsplatz (A1) und dem mindestens einen zweiten Kommunikationsarbeitsplatz (A2) Mittel vorhanden sind, mit denen an dem mindestens einen zweiten Kommunikationsarbeitsplatz (A2) erstellte Dokumente zur Weiterbearbeitung an dem mindestens einen ersten Kommunikationsarbeitsplatz (A1) bereitgestellt werden können.

2. Kommunikationssystem nach Anspruch 1, bestehend aus
- mindestens einem Gruppenarbeitsplatz (A3), der über eine Steuereinheit (St) mit dem Telekommunikationsnetz (ISDN) verbunden ist, und der aus einem Server (S), aus einer Vielzahl von Anzeigevorrichtungen (Dx), aus mindestens einer berührungsempfindlichen Schreiboberfläche mit Handschrifterkennung (S3) und/oder einer Tastatur (T3), und aus einer, der Vielzahl von Anzeigevorrichtungen (Dx) entsprechenden Anzahl von Kameras (C3), besteht.

3. Kommunikationssystem nach Anspruch 2, bei dem der mindestens eine Gruppenarbeitsplatz (A3) aus einer Großbildprojektionsanordnung (TF) besteht, die eine Großabbildung der berührungsempfindlichen Schreiboberfläche (S3) darstellt.

4. Verwendung des Kommunikationssystems nach Anspruch 2 für ein Mehrpersonenvideo-Konferenzsystem.

5. Verfahren zur gemeinschaftlichen Kommunikation und Zusammenarbeit zwischen Kommunikationsarbeitsplätzen (A1, A2) zwischen denen eine Datenkommunikation mittels einer ersten Software erfolgt, die gleichzeitig auf beiden Arbeitsplätzen (A1, A2) Sprach- und/oder Bilddaten und/oder Dokumentdaten zur Anzeige bringt,
- bei dem auf einem ersten Arbeitsplatz (A1) ein Dokument mittels Berührung einer berührungsempfindlichen Oberfläche einer Anzeigevorrichtung (D1) markiert wird, mit Anmerkungen versehen wird und eine Folgefunktion ausgelöst wird,
- bei dem an dem ersten Arbeitsplatz (A1) mit Hilfe einer berührungsempfindlichen Schreiboberfläche (S1) mit Handschrifterkennung ein handschriftlicher Kommentar erstellt wird und
- bei dem auf einem zweiten Arbeitsplatz (A2) das Dokument erstellt, vollständig bearbeitet, abgelegt und versendet wird.

6. Verfahren nach Anspruch 5, bei dem auf einem Gruppenarbeitsplatz (A3) ein Dokument von einer Vielzahl von Personen gemeinschaftlich über eine berührungsempfindliche Schreiboberfläche mit Handschrifterkennung (S3) erstellt, markiert oder kommentiert wird, und von dem aus Folgefunktionen ausgelöst werden.

## Claims

1. A communications system
- with at least one first communication workstation (A1), which consists of a display device (D1) with a touch-sensitive surface, a data-processing terminal (PC1) with software for a user interface, a camera (C1), a touch-sensitive write surface (S1) with handwriting recognition on which handwritten comments can be generated, and an interface for providing a connection with a telecommunications network (ISDN) for transmitting voice and/or video data and/or document data, and at which documents can be marked, annotations can be inserted, follow-up functions can be intiated, and services can be called up by input via the touch-sensitive surface of the display device (D1),
- with at least one second communication workstation (A2), which consists of a display device (D2), a data-processing terminal (PC2) with a keyboard (T), a camera (C2), and an interface for providing a connection with the telecommunications network (ISDN), and at which documents are created and edited and follow-up functions are initiated by means of the keyboard (T) and the data-processing terminal (PC2),
- wherein the at least one first communication workstation (A1) is connected with the at least one second communication workstation (A2) via the telecommunications network (ISDN), and
- wherein at the at least one first communication workstation (A1) and the at least one second communication workstation (A2), means are provided whereby documents created at the at least one second communication workstation (A2) can be made available for further editing at the at least one first communication workstation (A1).

2. A communications system as claimed in claim 1, comprising
- at least one group workstation (A3) connected via a control unit (St) to the telecommunications network (ISDN) and comprising a server (S), a plurality of display devices (Dx), at least one touch-sensitive write surface (S3) with handwriting recognition and/or a keyboard (T3), and a number of cameras (C3) corresponding to the plurality of display devices (Dx).

3. A communications system as claimed in claim 2 wherein the at least one group workstation (A3) comprises a large-screen projection arrangement (TF) which displays a large image of the touch-sensitive write surface (S3).

4. Use of the communications system claimed in claim 3 for a multiparty videoconferencing system.

5. A method for communication and collaboration between communication workstations (A1, A2) between which data communication is conducted using first software which causes voice and/or video data and/or document data to be displayed simultaneously at both workstations (A1, A2),
- wherein at a first workstation (A1), a document can is marked and provided with annotations and a follow-up function is initiated by touching a touch-sensitive surface of a display device (D1),
- wherein at the first workstation (A1), handwritten comments are generated using a touch-sensitive write surface (S1) with handwriting recognition, and
- wherein at a second workstation (A2), the document is created, edited, filed, and transmitted.

6. A method as claimed in claim 5 wherein at a group workstation (A3), a document is created, marked, or annotated by a group of persons via a touch-sensitive write surface (S3) with handwriting recognition, and wherein follow-up functions are initiated from said group workstation.

## Revendications

1. Système de communication comportant :
- au moins un premier poste de travail de communication (A1) qui comprend un dispositif d'affichage (D1) avec une surface tactile, un terminal de traitement de données (PC1) doté d'un logiciel pour une surface utilisateur, une caméra (C1) et une surface d'écriture tactile (S1) qui est dotée d'un dispositif de reconnaissance de caractères manuscrits et sur laquelle un commentaire manuscrit peut être rédigé, et une interface pour la connexion avec un réseau de télécommunication (RNIS), pour la transmission de données de parole et/ou d'images et/ou de données de documents, et dans lequel, sur le premier poste de travail de communication (A1), des documents peuvent être marqués, au moyen d'une entrée, par l'intermédiaire de la surface tactile du dispositif d'affichage (D1), des annotations insérées, les fonctions consécutives déclenchées et des services appelés,
- au moins un second poste de travail de communication (A2) qui comprend un dispositif d'affichage (D2), un terminal de traitement de données (PC2) avec un clavier (T), une caméra (C2) et une interface pour la connexion avec le réseau de télécommunication (RNIS) et dans lequel, sur le second poste de travail de télécommunication (A2), des documents peuvent être rédigés et traités au moyen du clavier (T) et du terminal de traitement de données (PC2) et les fonctions consécutives déclenchées,
- dans lequel au moins un premier poste de travail de communication (A1) est relié au moins à un second poste de travail de télécommunication par l'intermédiaire du réseau de télécommunication (RNIS)
- et dans lequel, sur au moins un premier poste de travail de communication (A1) et au moins un second poste de travail de télécommunication (A2), il existe des moyens grâce auxquels des documents rédigés au moins sur un second poste de travail de communication (A2) peuvent être mis à la disposition d'au moins un premier poste de travail de communication (A1) à des fins de traitement ultérieur.

2. Système de communication selon la revendication 1, comportant
- au moins un poste de travail de groupe (A3) qui est relié au réseau de télécommunication (RNIS) par l'intermédiaire d'une unité de commande (St) et qui se compose d'un serveur (S), de plusieurs dispositifs d'affichage (Dx), d'au moins une surface d'écriture tactile dotée d'un dispositif de reconnaissance des caractères manuscrits (S3) et/ou d'un clavier (T3) et d'un nombre de caméras (C3) correspondant au nombre de dispositifs d'affichage (Dx).

3. Système de communication selon la revendication 2, dans lequel au moins un poste de travail de groupe (A3) comprend un dispositif de projection sur grand écran (TF) qui représente une reproduction en grand de la surface d'écriture (S3) tactile.

4. Utilisation du système de communication selon la revendication 2 pour un système de visioconférence à plusieurs personnes.

5. Procédé de communication et de collaboration commune entre des postes de travail de communication (A1, A2) entre lesquels a lieu une communication de données à l'aide d'un premier logiciel qui affiche, en même temps sur les deux postes de travail (A1, A2), des données de parole et/ou d'image et/ou des données de documents,
- dans lequel, sur un premier poste de travail (A1), un document est marqué à l'aide de l'effleurement d'une surface tactile d'un dispositif d'affichage (D1), est doté d'annotations et dans lequel une fonction consécutive est déclenchée,
- dans lequel, sur le premier poste de travail (A1), un commentaire manuscrit est rédigé à l'aide d'une surface d'écriture (S1) dotée d'un dispositif de reconnaissance de caractères manuscrits et
- dans lequel, sur un second poste de travail (A2), le document est rédigé, entièrement traité, déposé et envoyé.

6. Procédé selon la revendication 5, dans lequel, sur un poste de travail de groupe (A3), un document est rédigé, marqué ou commenté en commun par plusieurs personnes par l'intermédiaire d'une surface d'écriture dotée d'un dispositif de reconnaissance de caractères manuscrits (S3) et à partir duquel des fonctions consécutives sont déclenchées.
